(19) **Europäisches Patentamt**
**European Patent Office**
**Office européen des brevets**

(11) **EP 1 207 507 B1**

(12) **EUROPEAN PATENT SPECIFICATION**

(45) Date of publication and mention
of the grant of the patent:
**01.08.2007 Bulletin 2007/31**

(51) Int Cl.:
*G08C 13/00* (2006.01)      *H04B 7/26* (2006.01)
*G08C 17/00* (2006.01)

(21) Application number: **01308958.6**

(22) Date of filing: **22.10.2001**

(54) **Method and apparatus for reducing differential delay problems in audio communications systems with at least two transmitters**

Vorrichtung und Verfahren zur Reduzierung von differentiellen Verzögerungen in einem System zur Übermittlung von Audiosignalen mit mindestens zwei Sendern

Procédé et dispositif permettant de réduire les difficultés liées aux délais différentiels dans un système de communication de signaux audio avec au moins deux émetteurs

(84) Designated Contracting States:
**AT BE CH CY DE DK ES FI FR GR IE IT LI LU MC NL PT SE TR**

(30) Priority: **23.10.2000 GB 0025916**

(43) Date of publication of application:
**22.05.2002 Bulletin 2002/21**

(73) Proprietor: **National Air Traffic Services Limited**
**Whiteley**
**Fareham**
**Hampshire PO15 7FL (GB)**

(72) Inventor: **Cruickshank, Stephen Kenneth**
**Oxted,**
**Surrey RH8 0LQ (GB)**

(74) Representative: **Davies, Simon Robert et al**
**D Young & Co**
**120 Holborn**
**London, EC1N 2DY (GB)**

(56) References cited:
**EP-A- 0 514 813**      **EP-A- 0 681 380**
**WO-A-95/01673**      **US-A- 2 872 507**
**US-A- 4 525 862**      **US-A- 5 241 689**
**US-A- 5 291 518**      **US-A- 5 475 393**

• **LEON W. COUCH: "digital and analog communication systems" 1997 , TOM ROBBINS , NEW JERSEY XP002264577 * page 229 - page 233 ***

**Description**

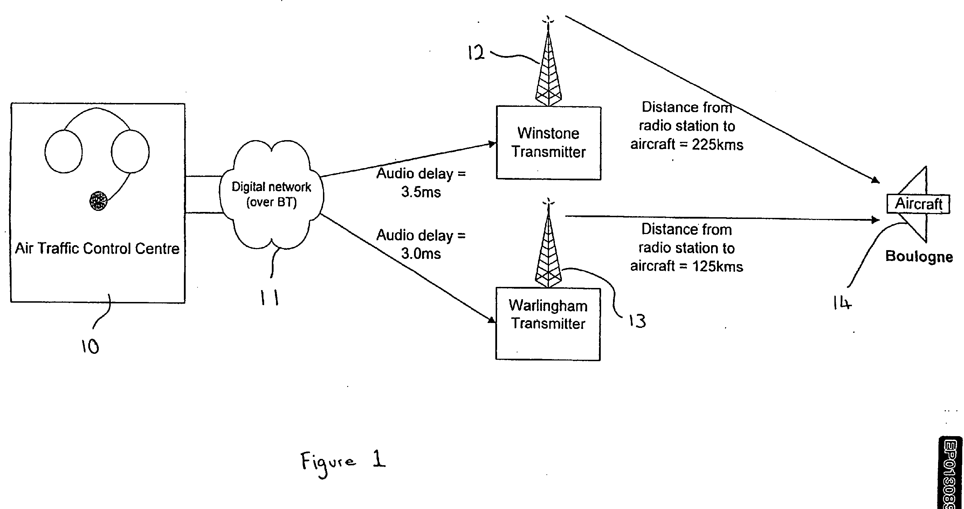

The present invention relates to audio communications systems in which at least two transmitters are able to transmit identical audio signals to a receiver. Systems of this type are sometimes used in the aviation industry for communication between air traffic control centres and aircraft. One such system is illustrated schematically in Figure 1. As shown in Figure 1, audio, ie. voice, signals from an air-traffic control centre 10 are conveyed over a network 11, to be discussed further below, to two radio frequency transmitters 12 and 13. The transmitters communicate with equipment on an aircraft 14 where the audio signals are reproduced. Figure 1 shows the particular example where an aircraft is approaching the South East of England from Boulogne on the coast of France. As the aircraft approaches England, it will receive air traffic control signals from the transmitters 12 and 13 at Winstone and Warlingham. The time taken for signals to reach the aircraft via network 11 and transmitter 12 is different from the time taken for signals to reach the aircraft via network 11 and transmitter 13. This difference is referred to as a "differential delay".

There are two factors which contribute to this delay. The first is due to the relative distances between the respective transmitters and the aircraft and the second is due to the different propagation times for the signals to the respective transmitters via the network 11. The effect of the differential delay is to cause a phase shift between the respective signals resulting in destructive interference at certain frequencies (as well as constructive interference at other frequencies), and hence significant attenuation (and amplification) and consequent distortion of the received signal in certain frequency bands. For most of its travel, the signal strength received by the aircraft will be unequal so that the signal from one transmitter swamps the other and the distortion is insignificant. However, the differential delay can cause problems where the receiver is receiving the same audio power from both transmitters. Equal signal strength is not necessarily at equal distances from each transmitter or radio station. The signal strength from each station may depend on many factors, some of these being:

Polar diagram of transmitter site antenna
Height (the ground wave and direct wave interact to vary the signal strength)
Land mass between the station and aircraft (especially long distance)
Polar diagram of aircraft antenna
Banking of aircraft.

In the example of Figure 1, transmitters 12, 13 are respectively 225km and 125km from the aircraft.
This causes a differential delay of:

$$\frac{100000m}{3 \times 10^8 \text{ m/s (the speed of light in air)}} = 0.33 \text{ milliseconds}$$

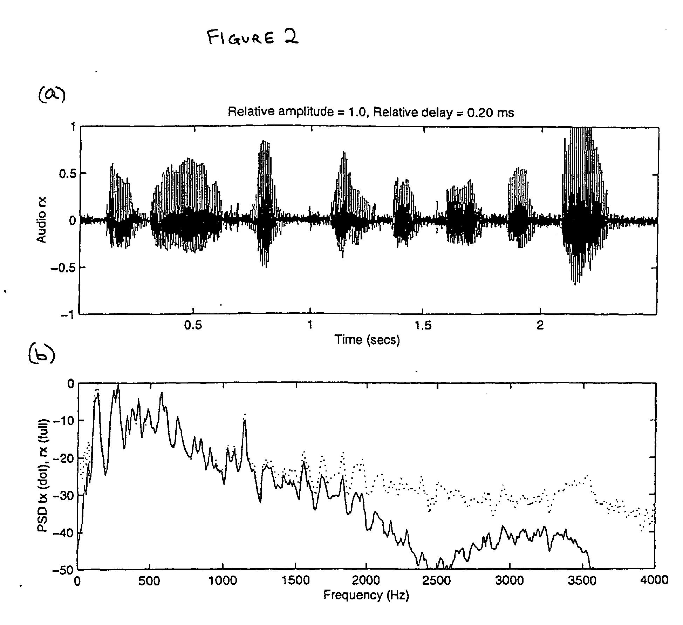

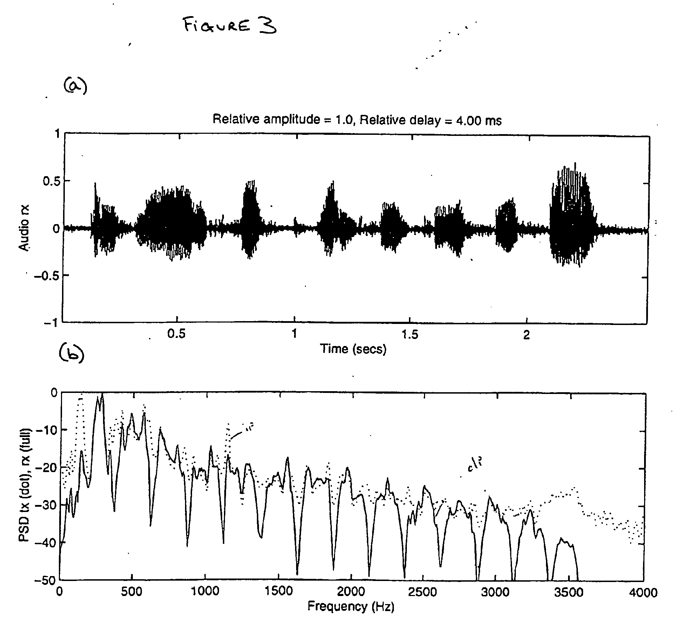

The delay due to different propagation times over the network 11 is estimated to be 0.5 milliseconds, resulting in a total differential delay of 0.83 milliseconds.
The subjective of level of degradation at audio frequencies depends on the length of the differential delay, as different delays lead to attenuation of different frequencies. Ideally, the differential delay should be less than about 0.1ms. However, this is impractical to achieve because difference in propagation delays from transmitters to the aircraft can exceed this, even at locations where signals strengths from the transmitters are similar. Differential delays up to about 2ms tend to sound particularly bad because they cause broad nulls in the received audio spectrum. It has been found that higher delays are better for a radio operator because they result in many narrow audio nulls and peaks, a large proportion of the original audio power is present, and speech is readily intelligible. However, the delay must not be too great or there is an audible delay in the side-tone to the operator from the reference receiver, which is very confusing to the operator.
The problem can be better understood by considering the graphs of Figures 2 and 3. Figures 2(a) and 3(a) show variations with time of a typical voice signal received simultaneously from two transmitters separated by different differential delays of 0.20ms and 4ms respectively, whilst Figures 3(a) and 3(b) show power spectral density plots for the transmitted and received signals. These graphs have been obtained by computer simulation using real voice data.
It is clear from Figure 2(b) that a differential delay of 0.2ms causes severe distortion of the audio signal. Comparing the transmitted signal shown in dotted lines with the received signal shown in solid lines, it will be seen that there is a severe attenuation of signals above about 2,500 Hz. However, in Figure 3(b) there are many narrow nulls in the spectrum. (The audio is filtered above 3.4 kHz to limit the bandwidth). Thus little of the original audio information is lost, and the signal of Figure 3 is of acceptable quality.
The problem of differential delay has been addressed temporarily by adding a fixed delay in one of the links to the transmitters to try to ensure that the differential delay is always equal to 4ms. Incidentally, delays of this order have no appreciable effect on the r.f. carrier signals. However, this solution requires manual measurement of the differential delay and sometimes fails because of re-routing of the audio signal through the network 11. The network typically consists of digital telecommunications links, the operation of which may be controlled by a third party and out of the control of the air traffic control provider. Therefore, the air traffic control provider may not always be notified when re-routing of the network 11 occurs.

There is therefore a need for communications system which avoids the problems of differential delay even when signals travelling over the network are re-routed.

Ideally, the solution to this problem needs to satisfy all of the following requirements:

Audio quality independent of delay in the digital network feeding the transmitters.
Independent of the RICE (radio telephony interface control equipment) control and monitoring system (as this would be difficult and expensive to modify).
Compatible with the current analogue control and monitoring system.
Acceptable audio quality to aircraft receiving a single, dominant transmitter.
Acceptable audio quality to aircraft receiving two similar power signals from different transmitters (for both two and three transmitters).
Acceptable audio off-air side-tone quality to air traffic controller from receiver station.
Failure modes are important and should be considered.
Must require only minor changes to the existing communications infrastructure.

The present invention solves this problem by performing additional processing on the audio signal before it reaches the transmitters.

Thus, the present invention provides an audio communications system including an audio signal source, at least two transmitters for transmitting identical audio signals generated by the audio signal source to one or more receivers, and network means for conveying signals from the audio signal source to the transmitters, wherein the transmitters transmit to the receiver(s) modulated signals which are demodulated by the receiver(s), characterised in that at least one of the transmitters is provided with means for modifying signals received from the network means prior to transmission so as to change the phase of the received signals by an amount which is a function of time and/or frequency of the received signal, such that signal from said at least one transmitter is different from that of the corresponding signal in the other transmitter(s).

The invention also provides a method of operating a communications system as described in claim 18.

In the preferred embodiment the signal processing means simply comprise a filter. The filter acts on the digital signal received over the network 11 prior to it being transmitted from transmitter 12 or 13. The parameter variation may be random but the preferred filter is one whose response varies periodically, for example sinusoidally, with time or with the frequency of the received signal. The filter may additionally vary the amplitude of the signals. In the case of the system of the type illustrated in Figure 1, one or both of the transmitters may be provided with signal processing means. In the case where both transmitters are provided with signal processing means which vary the phase of the signal periodically with frequency, it is preferable that the phase change/frequency characteristic of the two signal processing means are 180° out of phase with each other. It should be noted however that the aim of the invention is to achieve at the receiver some of the audio frequencies being in-phase with each other although there will be some out of phase with each other.

In the preferred arrangement, the transmitters transmit amplitude modulated signals to the receiver(s), although the system may work equally well with other types of modulation such as frequency or pulse width modulation. Implementation of the invention need not require any additional hardware at transmitter stations. Many signal transmitters have suitable signal processors which simply require reprogramming to provide the necessary pre-filtering to put the invention into practice.

Embodiments of the invention will now be described by way of example only and with reference to the accompanying drawings in which:

Figure 1 is a schematic diagram of a conventional audio communications system in which an air traffic control centre communicates with an aircraft;
Figure 2(a) shows the variation in amplitude with time of an audio signal received from two transmitters at equal strength, delayed with respect to each other by 0.2ms;
Figure 2(b) shows the power spectral densities of transmitted and received signals corresponding to Figure 2(a);
Figures 3(a) and 3(b) are similar to Figures 2(a) and 2(b) showing the signals delayed by 4ms with respect to each other;
Figure 4 is a schematic diagram of an audio communications system according to the invention in which an air traffic control centre communicates with an aircraft;

Figure 5 is a graph of delay vs. time for a filter which delays signals randomly over time;

Figure 6 is a graph illustrating the response of a filter which varies phase sinusoidally with frequency;

Figure 7 shows impulse response, magnitude response and group delay for a filter imposing monotonic group delay variation over frequency;

Figures 8 (a) to (d) are typical plots of filter responses for filters which vary both phase and amplitude sinusoidally with frequency;

Figures 9 (a) and (b) are graphs of filter responses for filters which vary phase sinusoidally with frequency used in a two transmitter system;

Figures 10 (a) to (c) are graphs of filter responses for three filters varying phase only sinusoidally with frequency used in a three transmitter system;

Figure 11 (a) shows the variation in amplitude with time of an audio signal received from two transmitters at equal strength, delayed by 0.25 ms with respect to each other;

Figure 11 (b) shows the power spectral densities of transmitted and received signals corresponding to Figure 11(a) after prefiltering with the preferred filter for use in a two transmitter system according to the invention; and .

Figures 12(a) and (b) are similar to Figures 11(a) and (b) showing the signals delayed by 5 ms.

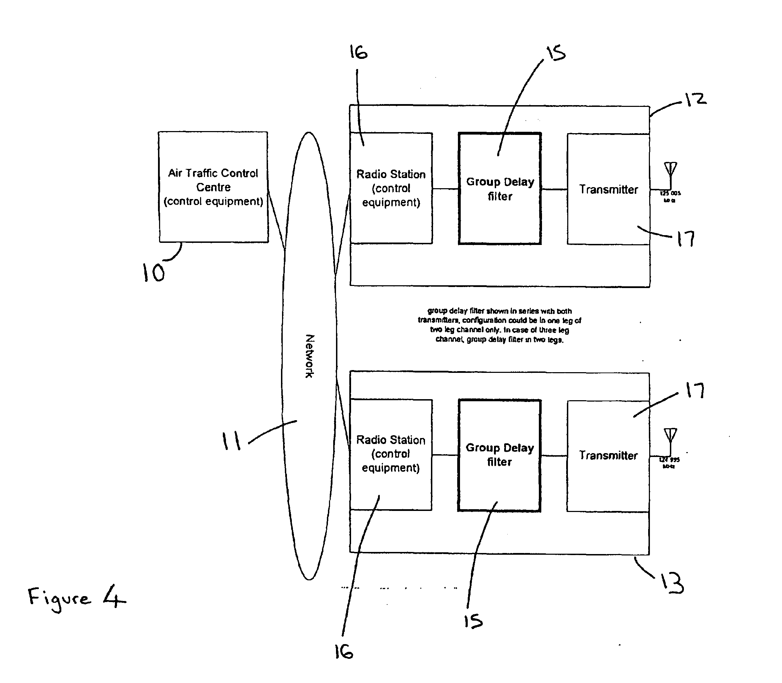

Referring now to Figure 4, items in this drawing corresponding to similar items in Figure 1 are identified by the same reference numerals. The system of Figure 4 is similar to Figure 1 except that at each transmitter 12, 13 a group delay filter 15 is present between transmitter radio station control equipment 16 and output transmitters 17.

It should be noted that although the two transmitters 17 operate on the same notional amplitude modulation frequency, in fact the frequencies are slightly offset so that radio station 12 operates at 125.005 MHZ and station 13 operates at 124.995 MHZ. The imprecision of the tuner of the aircraft is such that both signals are received and demodulated simultaneously.

As noted above, the degradation of the received signals when there is a differential delay between the two transmitters occurs because the two identical audio signals interfere with each other. At those frequencies for which the delay is equal to an odd number of half-wavelengths, the interference is destructive and therefore those frequencies for which the delay equals an even number of half-wavelengths interfere constructively, so that these frequencies are boosted. The effect of this is that the received signals can sound extremely muffled and/or distorted.

The intention behind pre-filtering the audio signals is that, by modifying the two signals in different ways, they become sufficiently different from each other that the amount of interference between them will be reduced considerably. At the same time, it is obviously important not to modify the signals too much or else they will become audibly distorted. This would be very unsatisfactory as the distortion would be noticeable even in the case of a single dominant transmitter. If the end result was comparable to that shown in Figure 3(b), this would be acceptable.

A number of different types of filter were investigated and their suitability tested using computer simulation. For each type of filter, both male and female voices were tested and a range of differential delays between 0 and 30 ms. In some cases a filter was applied at one transmitter only and in others the pre-filtering was applied at both transmitters. The filters which worked best applied a sinusoidal variation of a signal parameter (eg: phase, amplitude) with frequency, but others produced useful results.

Examples of suitable filters are described below.

Some filters are defined in terms of their frequency response H($f$). This relates the input and output signals of the filters in the frequency domain as follows:

$$Y(f) = H(f) X(f)$$

where Y($f$) and X($f$) are respectively the Fourier transforms of the output and input signals in the time domain $y(t)$ and x($t$). To allow for the possibility of two filters, two frequency responses are defined, namely H$_1$($f$) and H$_2$($f$).

Example 1

Sinusoidal delay variation over time for one transmitter.

This filter delays the input signals $x(t)$ by an amount $\delta$ that varies sinusoidally with time. Thus, the output of filter $y(t)$ is given by:

$$y(t) = x(t-\delta)$$

where

$$\delta = A\cos(2\pi t/T).$$

Parameters used for test purposes were $A = 20$ and $T = 0.2s$. Received signals using this arrangement were clearly intelligible although somewhat distorted.

Example 2

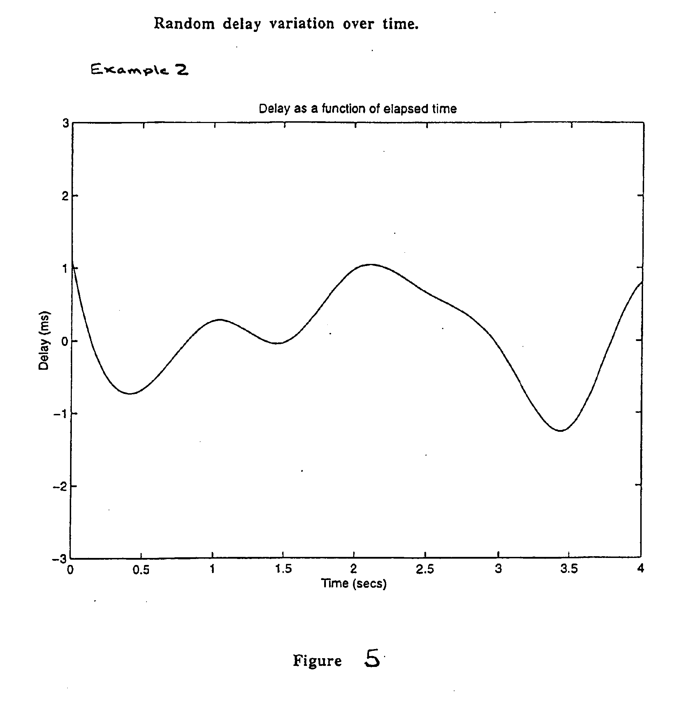

Random delay variation over time for one transmitter.
This filter is similar to the previous filter, except that $\delta$ is defined by picking a number of random values, $n$, between -0.5 and 0.5 and fitting a spline to the points to produce a smooth, but random curve. The amplitude of the curve was then scaled by a factor $A$. Different values of and $n$ were tested. Figure 5 shows an example of the variation in delay over time, for $A=20$.

Example 3

Sinusoidal amplitude variation over time for both transmitters.
This filter applies a sinusoidal amplitude modulation to the input signal, so that the output signals from the 2 transmitters are given by:

$$y_1(t) = x(t)[1+A\sin(2\pi t/T)]$$

$$y_2(t) = x(t)[1+A\sin(2\pi t/T)]$$

Again, different values of the parameters $A$ and $T$ were tested, eg $A = 0.5$, $T = 0.01, 0.1$ or $1s$. Although signals were intelligible, the periodic changes in signal magnitude were clearly audible, particularly for the single transmitter case, and this reduced the clarity of the signal.

Example 4

Sinusoidal amplitude variation over frequency for one transmitter For this particular transmitter, the frequency response was given by:

$$H_1(f) = 1$$

$$H_2(f) = 1 + A\sin(2\pi N_f f'),$$

where $A$ is the magnitude of the amplitude variation and $N_f$ is the number of cycles per unit frequency. In this and all subsequent equations, $f'$ is the normalised frequency, defined as the frequency, f, divided by half the sampling frequency, i.e.

$$f' = \frac{f}{F_s/2},$$

where ($F_s$ = 8kHz).

Suitable parameters are $A$ = 0.6 and $N_f$= 8. Note that the characteristics of the filter (as for all subsequent filters) do not vary over time.

Example 5

Sinusoidal phase variation over frequency for one transmitter.
In this proposed arrangement the two frequency responses are given by:

1st Transmitter $H_1(f)$ = 1 (ie: no pre-filtering)
2nd Transmitter $H_2(f)$ = exp (-j$\pi$P sin(2 $\pi$N$f$)

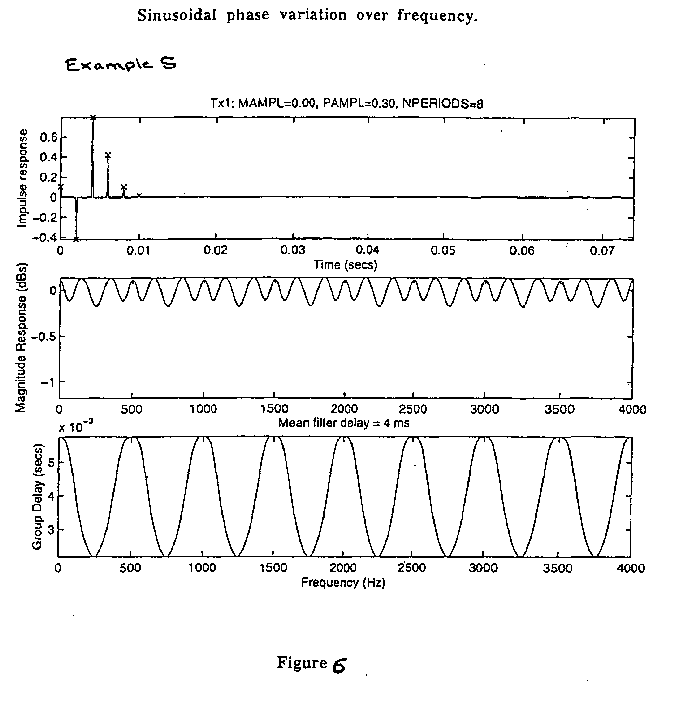

In this example, $N_f$ is the number of cycles per unit frequency and P is the amplitude of the sinusoidal phase variation. Figure 6 is a graph illustrating the filter response for a typical parameter set. This filter was tested with P=0.3 and $N_f$=8. This filter produced a definite improvement in sound quality over the range of differential delays.

Example 6

Monotonic group delay variation over frequency for one transmitter
As with the previous one, this filter modifies the phase of the signal in the frequency domain. However, rather than applying a periodic variation, it produces a monotonically varying phase (and therefore group delay) variation. The frequency response is:

$$H_1(f) = 1$$

$$H_2(f) = \exp(-j\pi P f'^2),$$

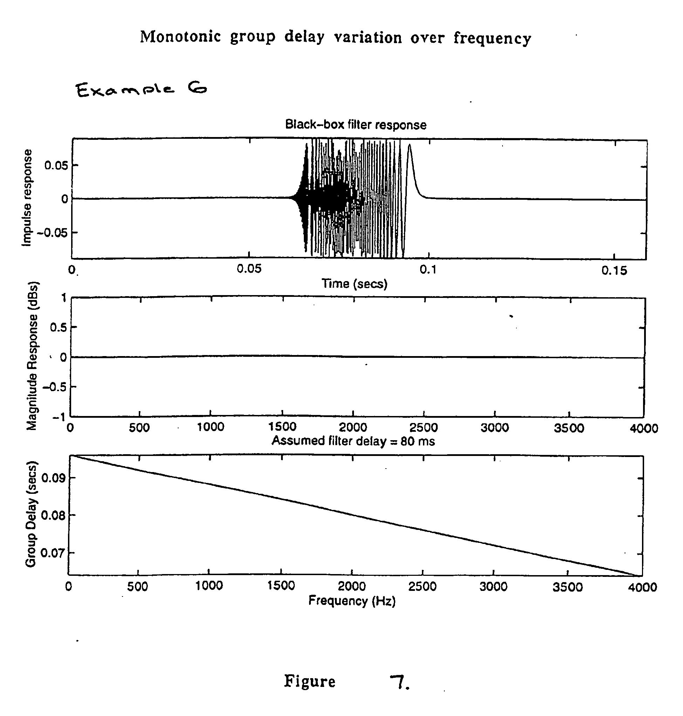

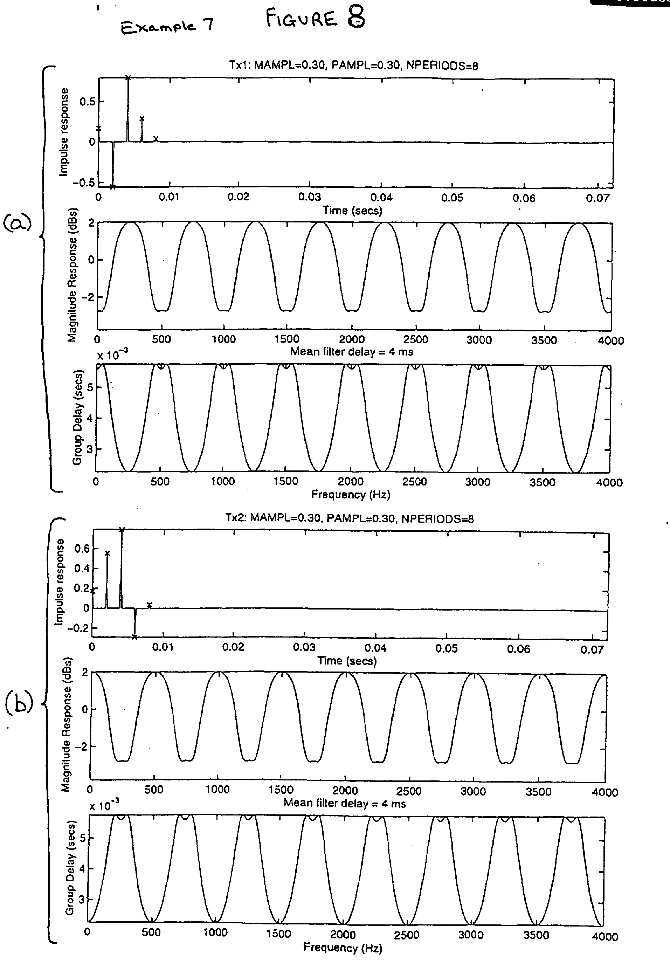

where, again, $P$ is a constant defining the magnitude of the variation. Figure 7 shows the variation in group delay over frequency and the corresponding impulse response of the filter, with $P$ = 128. Received signals are intelligible but this is not the best filter because it causes the received signals to sound very metallic. The single-transmitter output sounds particularly strange. In addition, it imposes a large overall delay on the signals at a higher frequencies, which would lead to a disconcerting amount of echo in the side-tone heard by the controllers. Nevertheless it may be useful for certain applications.

Example 7

Sinusoidal phase and amplitude variation over frequency for both transmitters. The frequency responses of these filters were specified initially by the following equations: -

$$H_1(f) = (1 - A\sin(2\pi N_f f' + \pi/2))\exp(-j\pi P\sin(2\pi N_f f'))$$

$$H_2(f) = (1 + A\sin(2\pi N_f f' + \pi/2))\exp(+j\pi P\sin(2\pi N_f f'))$$

From the frequency responses, the taps of the impulse responses were determined by taking the inverse Fourier transforms. A useful property of filters with periodic frequency responses is that the impulse response consists of only a few non-zero, equally spaced taps (this is a consequence of the fact that the impulse response and the frequency response are Fourier transforms of each other, and the FT of a periodic wave form is a series of discrete values). This means that the type of filter is very simple to implement and only requires a small amount of processing power. To simplify the filter, only the largest taps (or fewer, if less than 6 were larger than 0.002) were retained. These taps were equally spaced, with a spacing equal to $2*N_f$ samples at 8kHz audio sampling rate.

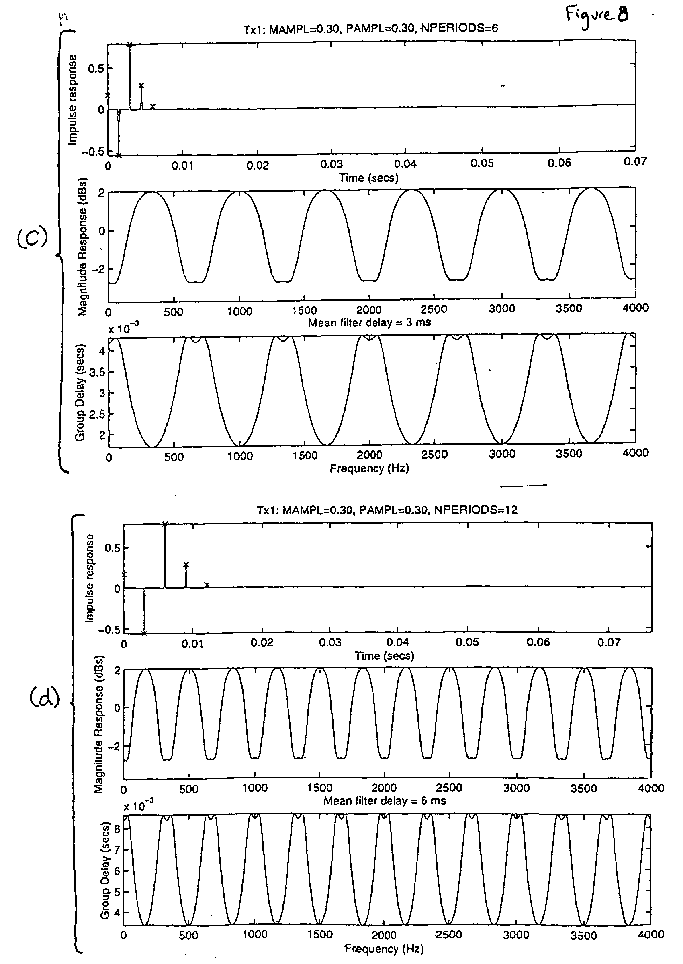

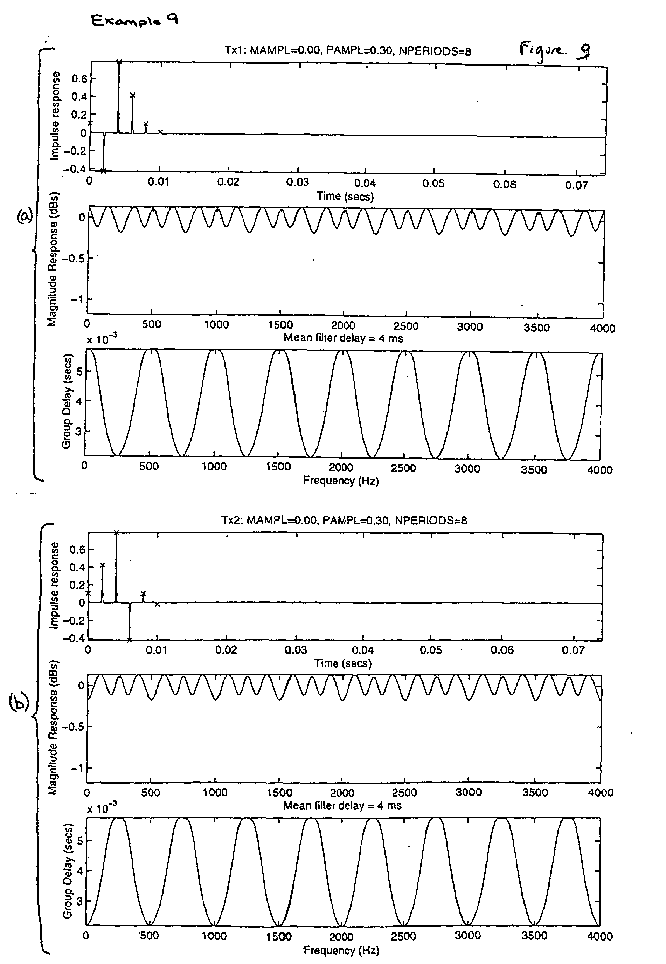

As before, the parameter A determines the magnitude of the amplitude variation and P determines the magnitude of the phase variation. $N_f$ determines the period of both variations, and hence the spacing of the taps in the impulse response, which is the main factor determining the mean delay of signals passing through the filter. In fact, the mean delay is roughly equal to the time between the first tap and the largest tap of the filter impulse response. In the filters we have looked at the largest tap is either the 2nd or 3rd non-zero tap. This leads to a mean delay of roughly either $2*N_f$ samples, equivalent to $N_f/4$ or $N_f/2$ms, respectively. Different parameter combinations were tested. Typical plots of the filter responses are shown in Figure 8(a) to (d).

These filters were found to be successful. In general they give satisfactory single transmitter output as well as an improvement in two transmitter output over the whole range of differential delays tested. Some parameter combinations produced better results than others, although in some cases it was very hard to choose between them. Overall the flavoured parameter set was A=0.3, P=0.3, $N_f$=8.

### Example 8

Sinusoidal amplitude variation over frequency for both transmitters.

This example considers the effects of only varying either amplitude over frequency, by setting $P = 0$ in the formula of Example 7 for the frequency response. This produced acceptable results although not as clear as Example 7.

### **Example 9**

Sinusoidal phase variation over frequency for both transmitters.

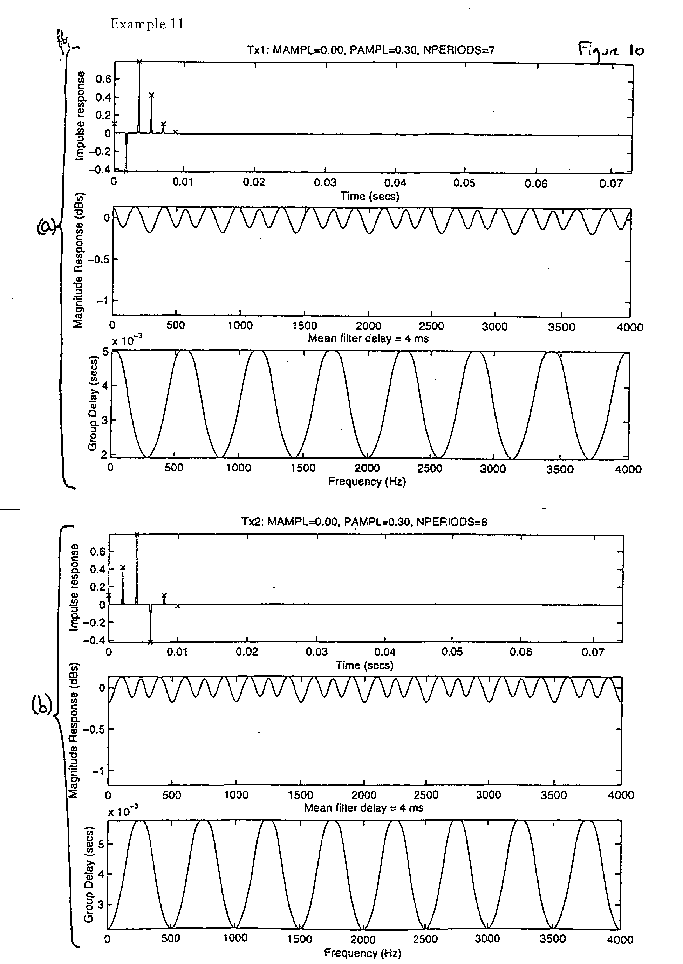

By setting A to zero in the frequency response formula given for example 2, it was possible also to investigate the effect of varying phase only. For both one and two transmitters, the received signals were almost identical to the results for the preferred version of the amplitude and phase variation transmitter described as example 2. The best parameter set was that with P=0.3, $N_f$=8. Graphs of the filter response for this parameter set are given in Figures 9(a) and (b).

Since this arrangement does not significantly affect the amplitude of the transmitted signals, it was felt to be marginally preferable to Example 7. These filters were also suitable in that the mean delay they add to the signals was 4ms which is comparable to the fixed delay currently used.

As noted above, the degradation in the received signals when there is a differential delay occurs because the interference produces nulls in certain parts of the audio spectrum. In addition to the filtering discussed above it is possible to increase the power or pre-emphasise the most important parts of the spectrum so that the effect of the nulls is not so severe.

For example, it is possible to carry out pre-emphasis in conjunction with the sinusoidal phase-only filter of Example 9. Prior to passing through that filter, the transmitted signals can be filtered through a modified band pass filter. This may be a 1st order Butterworth filter, but with its coefficients adjusted so that the output of the filter is equal to the input plus a variable proportion of the original band-pass filter. Thus, if the frequency response of the unmodified 1st order Butterworth filter H($f$) is given by:

$$H(f) = B/A,$$

where B and A are the filter coefficients, the frequency response, H(f) of the modified filter is given by

$$H'(f) = 1+K(B/A),$$

where K is a constant which determines the proportion of the original filter that is added to the original signal. The frequencies which might require pre-emphasis are in the 500-2000 Hz range.

There are a small number of air traffic control sectors which use three transmitters rather than two. For such situations although pre-filtering two out of the three transmitted signals may reduce distortion due to differential delay, the preferred solution is to pre-filter signals at all three transmitters.

Example 10

Combinations of sinusoidal phase and amplitude variation for three transmitters.
The filter for each transmitter was based on Example 7, but the three transmitters had different combinations of A and P. The frequency responses were given by:

$$H_1(f) = (1 - A_1 \sin(2\pi N_f f' + \pi/2)) \exp(-j\pi P_1 \sin(2\pi N_f f'))$$

$$H_2(f) = (1 + A_2 \sin(2\pi N_f f' + \pi/2)) \exp(+j\pi P_2 \sin(2\pi N_f f'))$$

$$H_3(f) = (1 + A_3 \sin(2\pi N_f f' + \pi/2)) \exp(-j\pi P_3 \sin(2\pi N_f f'))$$

where the parameters were chosen to be:

Tx1: $A_1$=O.3, $P_1$=0.3
Tx2: $A_2$ 0.0, $P_2$=0.3
Tx3: $A_3$=0.3, $P_3$=0.0

The following combinations of signal amplitudes and delays were tested:

|   |             | Tx1 | Tx2  | Tx3  |
|---|-------------|-----|------|------|
| 1 | Ampl.       | 1   | 1    | 1    |
|   | Delays (ms) | 0   | 2    | 0-25 |
| 2 | Ampl.       | 1   | 0    | 1    |
|   | Delays (ms) | 0   | -    | 0.25 |
|   |             |     |      |      |
| 3 | Ampl.       | 1   | 1    | 0    |
|   | Delays (ms) | 0   | 0-25 | -    |
| 4 | Ampl.       | 0   | 1    | 1    |
|   | Delays (ms) | -   | 0    | 0-25 |

NB: 2ms was chosen for the fixed differential delay for Tx2 in case 1 because this delay is one of the worst. Results for other delay values should be better, since the combined signal from Txland Tx2 would be degraded less.
Case 1 simulates situations where the aircraft is roughly equidistant from all 3 transmitters (this can only be true over a small region of space). Cases 2, 3 and 4 simulate situations where the aircraft is equidistant from two of the transmitters but quite far from the third.
The results for cases 1 and 3 were good, with the received signals remaining quite clear over the range of delays. The results for cases 2 and 4 were less satisfactory, with the received signals sounding quite thin and with noticeable degradation still present at low delays. This is consistent with poorer performance when one of the dominant transmitters is Tx3, which does not use phase variation.

**Example 11**

Sinusoidal variation in phase only, but with different values of $N_f$.
An other alternative is to use just a phase-only variation (since amplitude variation is less desirable in general), but with a different period for one of the transmitters. In this case, the frequency responses were given by:

$$H_1(f) = \exp(-j\pi P \sin(2\pi N_{f1} f'))$$

$$H_2(f) = \exp(-j\pi P \; \sin(2\pi N_{f2} f'))$$

$$H_3(f) = \exp(+j\pi P \; \sin(2\pi N_{f2} f'))$$

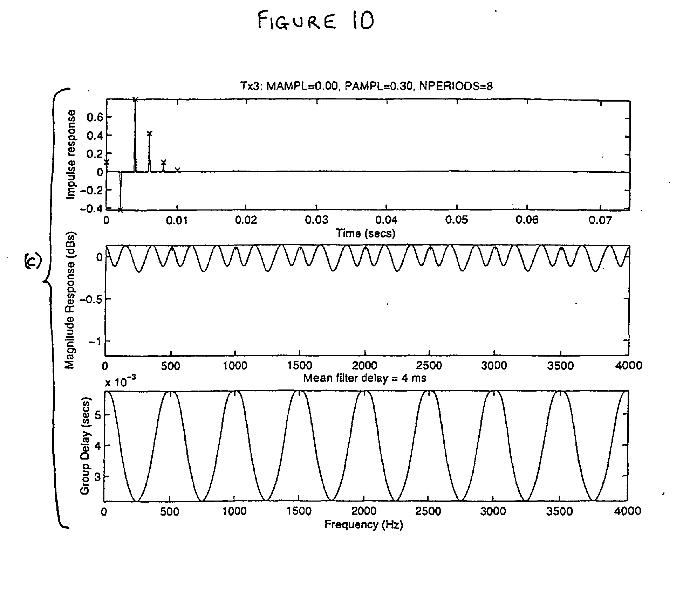

where P = 0.3, $N_{f1}$, = 7 and $N_{f2}$ = 8. Filter responses for the 3 filters are shown graphically in Figures 10(a) to (c).

The same combinations of signal amplitudes and delays as in section Example 10 were examined. (Case 4 is the same as the two transmitter case investigated in Example 9, and so the simulations were not repeated).

The results for cases 2 and 3 were good. The received signals sounded roughly similar over a wide range of delays and were almost as clear as for the best two-transmitter results. For case 1, the received signals did not sound as good - they were harsher in tone and there was a slight high pitched background whine. However, they were still better than the unprocessed signals. Finally, since there is no amplitude modulation being carried out, the single transmitter cases will also still be good.

**FILTER COEFFICIENTS**

The output of a filter is defined by its a and b coefficients as follows:

$$a_0 y(n) = b_0 x(n) + b_1 x(n-1) + \ldots + b_k x(n-k) + \ldots - a_1 y(n-1) - a_2 y(n-2) - \ldots - a_k y(n-k) - \ldots,$$

where $y(n)$ is the $n^{th}$ sample of the output and $x(n)$ is the $n^{th}$ sample of the input.

The coefficients for the two recommended filters, and for the pre-emphasis filter, are listed below. Any coefficients not listed in the table are equal to zero.

Forth filter types in Examples 7 and 9, the non-zero b coefficients are equally spaced - the spacing, $\Delta$, varies with the value *of* $N_f$. For $N_f$ = 6, 8 and 12, $\Delta$ takes the values 12, 16 and 24, respectively. The notation $b_\Delta$ means the $\Delta$th b-coefficient, i.e. for $\Delta$ =16, $b_\Delta$, bo and $b_{2\Delta}$ are the 1st, 17th and 33rd coefficients.

For the three-transmitter case, two of the transmitters should have the same coefficients and spacings as given in the table for Example 9. The third should have the same coefficients as for Tx 1, but with a spacing of $\Delta$ =14 (equivalent to $N_f$ = 7).

**Preferred filters**

| Filter type | Parameters | Tx | Coefficients |
|---|---|---|---|
| EXAMPLE 7 | $A$ =0.0, $P$ =0.3 | 1 (3) | $a_0$=1.0 <br> $b_0$=0.103, $b_\Delta$=-0.421, $b_{2\Delta}$=0.790, $b_{3\Delta}$=0.421, $b_{4\Delta}$=0.103, $b_{5\Delta}$=0.017 |
| | | 2 | $a_0$=1.0 <br> $b_0$=0.103, $b_\Delta$=0.421 $b_{2\Delta}$=0.790, $b_{3\Delta}$=-0.421, $b_{4\Delta}$=0.103, $b_{5\Delta}$=-0.017 |
| EXAMPLE 9 | $A$ =0.3, $P$ =0.3 | 1 | $a_0$=1.0 <br> $b_0$=0.169, $b_\Delta$=-0.555, $b_{2\Delta}$=0.790, $b_{3\Delta}$=0.287, $b_{4\Delta}$=0.037 |
| | | 2 | $a_0$=1.0 <br> $b_0$=0.169, $b_\Delta$=0.555, $b_{2\Delta}$=0.790, $b_{3\Delta}$=-0.287, $b_{4\Delta}$=0.037 |

**Pre-emphasis filter**

| | Parameters | Tx | Coefficients |
|---|---|---|---|
| | $k$=1<br>1250-1750Hz | 1, 2 | $a_0$=1.0, $a_1$=-0.651, $a_2$=0.668<br>$b_0$=1.166, $b_1$=-0.651, $b_2$=0.502 |

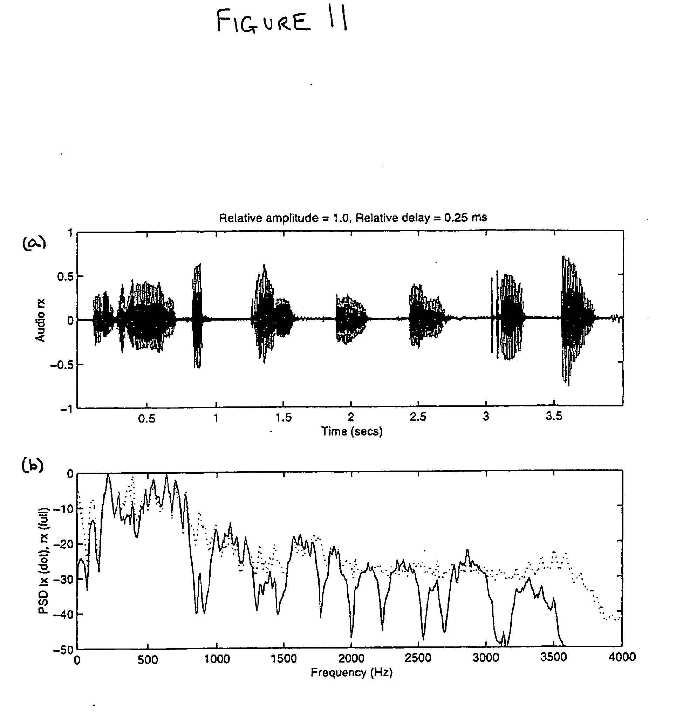

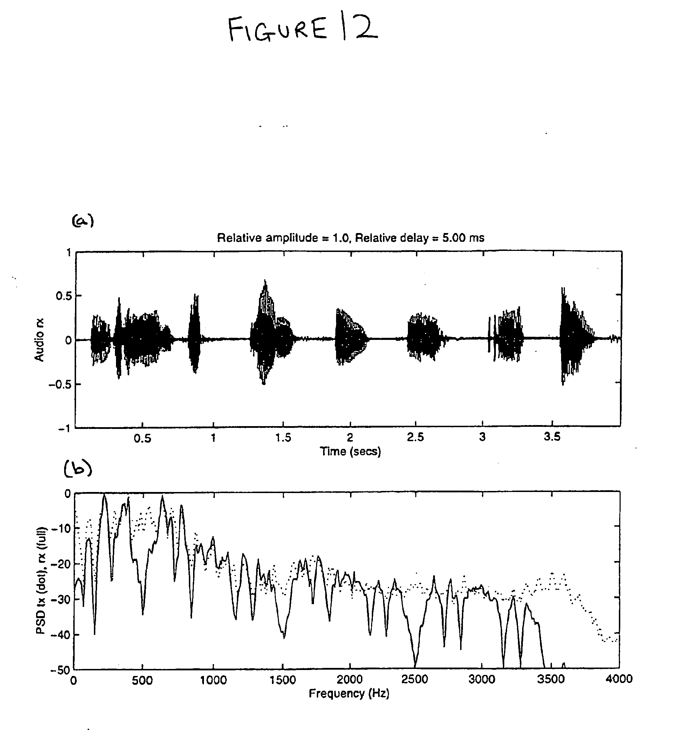

As noted above, the preferred filter for a two transmitter system is that of Example 9. Figures 11(a) and 12(a) show variations with time of a typical voice signal received from two transmitters separated by differential delays of 0.25 ms and 5.00 ms respectively. Figures 11(b) and 12(b) show power spectral density plots for transmitted and received signals, with the signals having been prefiltered according to the invention with the filter of Example 9. The results obtained in both cases are comparable with the received signal shown in Figure 3(b). Thus, the filter of Example 9 produces acceptable results over a range of differential delays. Therefore, with a filter of this type in place, differences in the differential delay caused by re-routing of the network 11 do not seriously degrade the signal.

**Claims**

1. An audio communications system including an audio signal source, at least two transmitters for transmitting identical audio signals generated by the audio signal source to one or more receivers, and network means for conveying signals from the audio signal source to the transmitters, wherein the transmitters transmit to the receiver(s) modulated signals which are demodulated by the receiver(s), **characterised in that** at least one of the transmitters is provided with means for modifying signals received from the network means prior to transmission so as to change the phase of the received signals by an amount which is a function of time and/or frequency of the received signal, such that the signal from said at least one transmitter is different from that the corresponding signal in the other transmitter(s).

2. A system as claimed in claim 1 in which the amount of change of phase of the signals varies periodically with frequency.

3. A system as claimed in claim 2 in which the amount of change of phase of the signals varies sinusoidally with frequency.

4. A system as claimed in claim 1 in which the amount of change of the phase of the signals varies periodically with time.

5. A system as claimed in claim 4, in which the amount of change of the phase of the signals varies sinusoidally with time.

6. A system as claimed in claim 1 in which the amount of change of the phase changes randomly with frequency and/or time.

7. A system as claimed in any of claims 1 to 6 wherein the amplitude of the signals is additionally varied as a function of time and/or frequency of the received signal.

8. A system as claimed in any of claims 1 to 7 including two transmitters in which only one of the transmitters is provided with said signal processing means.

9. A system as claimed in any of claims 1 to 7 including two transmitters in which both transmitters are provided with said signal processing means.

10. A system as claimed in claim 9 when dependent on claim 2 or 3 in which both transmitters are provided with signal processing means for changing the phase of the signal periodically with frequency or time and in which the variations of phase with frequency of the two signal processing means are 180° out of phase with each other.

11. A system as claimed in claim 10 in which the magnitude of change of the phase is the same for both signal processing means.

12. A system as claimed in claims 9 to 11 including three transmitters in which all three transmitters are provided with said signal processing means.

13. A system as claimed in claim 12 in which the three signal processing means each have different amplitude responses.

**14.** A system as claimed in claim 12 or 13 in which the three signal processing means change the phase of the received signals by an amount which varies periodically with frequency and wherein the three signal processing means each have different periods.

**15.** A system as claimed in claim 12 or 13 in which the three signal processing means change the amplitude and phase of input signals and each have different combinations of parameters for amplitude and phase.

**16.** A system as claimed in any of claims 1 to 15 in which at least one transmitter further includes means for pre-emphasising certain frequencies prior to processing.

**17.** A system as claimed in any of claims 1 to 16 in which the transmitters are stationary.

**18.** A method of operating an audio communications system including an audio signal source, at least two transmitters for transmitting identical audio signals generated by the audio signal source to one or more receivers, and network means for conveying signals from the audio signal source to the transmitters, wherein the transmitters transmit to the receiver(s) modulated signals which are demodulated by the receiver(s), the method being **characterised by** processing, in at least one of the transmitters, signals received from the network means prior to transmission so as to change the phase of the received signals by an amount which is a function of time and/or frequency of the received signal, such that the signal from said at least one transmitter is different from that of the corresponding signal in the other transmitter(s).

**19.** A method as claimed in claim 18 including varying the amount of change of phase periodically with frequency.

**20.** A method as claimed in claim 19 including varying the amount of change of phase sinusoidally with frequency.

**21.** A method as claimed in claim 18 including varying the amount of change of phase periodically with time.

**22.** A method as claimed in claim 18 including varying the amount of change of phase sinusoidally with time.

**23.** A method as claimed in claim 18 in which the amount of change of the phase varies randomly with frequency and/or time.

**24.** A method as claimed in any of claims 18 to 23 including additionally varying the amplitude as a function of the time and/or frequency of the received signal.

**25.** A method as claimed in claim 19 or 20 in which the phase is varied in two transmitters in the system such that the phase variations are 180° out of phase with each other.

**26.** A method as claimed in claim 25 in which the magnitude of phase change is the same for the signals in both transmitters.

**27.** A method as claimed in any of claims 18 to 26 in which the system has three transmitters, the method comprising processing signals in all three transmitters prior to modulation for transmission such that the amplitude responses in the transmitters are different from each other.

**28.** A method as claimed in 25, 26 or 27 in which the phase of the received signals is changed by an amount which varies periodically with frequency using different periods in each of the three transmitters.

**29.** A method as claimed in claim 25, 26, 27 or 28 in which the signals are processed in the three transmitters so as to change their amplitude and phase using different combinations of parameters for all three transmitters.

**30.** A method as claimed in any of claims 18 to 29 including pre-emphasising certain frequencies prior to processing in at least one of the transmitter.

**Patentansprüche**

**1.** Audiokommunikationssystem mit einer Audiosignalquelle, mindestens zwei Transmittern für das Übertragen von identischen Audiosignalen, die von der Audiosignalquelle erzeugt wurden, an einen oder mehrere Empfänger, und einer Netzwerkeinrichtung für das Weiterleiten von Signalen von der Audiosignalquelle zu den Transmittern, wobei die Transmitter modulierte Signale zu dem (den) Empfänger(n) übertragen, die von dem (den) Empfänger(n) demoduliert werden, **dadurch gekennzeichnet, daß** zumindest einer der Transmitter mit einer Einrichtung für das Modifizieren von Signalen, die von der Netzwerkeinrichtung empfangen wurden, vor der Übertragung ausgestattet ist, um die Phase der empfangenen Signale um eine Größe zu verändern, die eine Funktion der Zeit und/oder der Frequenz des empfangenen Signals ist, so daß das Signal von zumindest einem Transmitter sich von dem entsprechenden Signal in dem (den) anderen Transmitter(n) unterscheidet.

2. System nach Anspruch 1, bei dem die Größe der Phasenveränderung der Signale periodisch mit der Frequenz variiert.

3. System nach Anspruch 2, bei dem die Größe der Phasenveränderung der Signale sinusförmig mit der Frequenz variiert.

4. System nach Anspruch 1, bei dem die Größe der Phasenveränderung der Signale periodisch mit der Zeit variiert.

5. System nach Anspruch 4, bei dem die Größe der Phasenveränderung der Signale sinusförmig mit der Zeit variiert.

6. System nach Anspruch 1, bei dem die Größe der Phasenveränderung sich zufällig mit der Frequenz und/oder Zeit verändert.

7. System nach einem der Ansprüche 1 bis 6, bei dem die Amplitude der Signale zusätzlich als eine Funktion der Zeit und/oder der Frequenz des empfangenen Signals variiert wird.

8. System nach einem der Ansprüche 1 bis 7, welches zwei Transmitter beinhaltet, von denen nur einer der Transmitter mit der Signalverarbeitungseinrichtung ausgestattet ist.

9. System nach einem der Ansprüche 1 bis 7, das zwei Transmitter beinhaltet, von denen beide Transmitter mit der Signalverarbeitungseinrichtung ausgestattet sind.

10. System nach Anspruch 9, wenn abhängig von Anspruch 2 oder 3, bei dem beide Transmitter mit einer Signalverarbeitungseinrichtung ausgestattet sind, für das Verändern der Phase des Signals periodisch mit der Frequenz oder der Zeit und bei dem die Phasenvariationen mit der Frequenz der zwei signalverarbeitenden Einrichtungen um 180° zueinander phasenverschoben sind.

11. System nach Anspruch 10, bei dem die Größe der Phasenverschiebung für beide Signalverarbeitungseinrichtungen gleich ist.

12. System nach einem der Ansprüche 9 bis 11, das drei Transmitter beinhaltet, wobei alle drei Transmitter mit der Signalverarbeitungseinrichtung ausgestattet sind.

13. System nach Anspruch 12, bei dem die drei Signalverarbeitungseinrichtungen jeweils verschiedene Amplitudenantworten haben.

14. System nach Anspruch 12 oder 13, bei dem die drei Signalverarbeitungseinrichtungen die Phase der empfangenen Signale um eine Größe verschieben, die periodisch mit der Frequenz variiert, und wobei die drei Signalverarbeitungseinrichtungen jeweils unterschiedliche Perioden haben.

15. System nach Anspruch 12 oder 13, bei dem die drei Signalverarbeitungseinrichtungen die Amplitude und die Phase der Eingangssignale verändern, und jeweils unterschiedliche Kombinationen von Parametern für Amplitude und Phase haben.

16. System nach einem der Ansprüche 1 bis 15, bei dem zumindest ein Transmitter weiterhin eine Einrichtung für das Vorverstärken bestimmter Frequenzen vor der Verarbeitung beinhaltet.

17. System nach einem der Ansprüche 1 bis 16, bei dem die Transmitter stationär sind.

**18.** Verfahren zum Betreiben eines Audiokommunikationssystems einschließlich einer Audiosignalquelle, zumindest zwei Transmitter für das Übertragen identischer Audiosignale, die von der Audiosignalquelle erzeugt wurden, zu einem oder mehreren Empfängern, und einer Netzwerkeinrichtung für das Weiterleiten von Signalen von der Audiosignalquelle zu den Transmittern, wobei die Transmitter modulierte Signale zu dem (den) Empfänger(n) übertragen, die von dem (den) Empfänger(n) demoduliert werden, wobei das Verfahren **gekennzeichnet ist durch** die Verarbeitung in zumindest einem der Transmitter von Signalen, die von der Netzwerkeinrichtung empfangen wurden, und zwar vor der Übertragung, so daß die Phase der empfangenen Signale um eine Größe verschoben wird, die eine Funktion der Zeit und/oder der Frequenz des empfangenen Signals ist, so daß das Signal von zumindest einem Transmitter sich von dem entsprechenden Signal in dem (den) anderen Transmitter(n) unterscheidet.

**19.** Verfahren nach Anspruch 18, das das Variieren der Größe der Phasenveränderung periodisch mit der Frequenz beinhaltet.

**20.** Verfahren nach Anspruch 19, das das Variieren der Größe der Phasenveränderung sinusförmig mit der Frequenz aufweist.

**21.** Verfahren nach Anspruch 18, bei dem die Größe der Phasenveränderung periodisch mit der Zeit variiert wird.

**22.** Verfahren nach Anspruch18, das die sinusförmige Variation der Größe der Phasenveränderung mit der Zeit beinhaltet.

**23.** Verfahren nach Anspruch 18, bei dem die Größe der Phasenveränderung zufällig mit der Frequenz und/oder der Zeit variiert.

**24.** Verfahren nach einem der Ansprüche 18 bis 23, das das zusätzliche Variieren der Amplitude als eine Funktion der Zeit und/oder der Frequenz des empfangenen Signals beinhaltet.

**25.** Verfahren nach Anspruch 19 oder 20, bei dem die Phase in zwei Transmittern in dem System variiert wird, so daß die Phasenvariationen um 180° zueinander verschoben sind.

**26.** Verfahren nach Anspruch 25, bei dem die Größe der Phasenveränderung für die Signale in beiden Transmittern gleich ist.

**27.** Verfahren nach einem der Ansprüche 18 bis 26, bei dem das System drei Transmitter hat, wobei das Verfahren das Verarbeiten der Signale in allen drei Transmittern vor der Modulation für die Übertragung aufweist, so daß die Amplitudenantworten in den Transmittern sich voneinander unterscheiden.

**28.** Verfahren nach Anspruch 25, 26 oder 27, bei dem die Phase der empfangenen Signale um eine Größe verändert wird, die sich periodisch mit der Frequenz ändert unter Verwendung von unterschiedlichen Perioden in jedem der drei Transmitter.

**29.** Verfahren nach Anspruch 25, 26, 27 oder 28, bei dem die Signale in den drei Transmittern verarbeitet werden, so daß deren Amplitude und Phase unter Verwendung von unterschiedlichen Kombinationen von Parametern für alle drei Transmitter verändert wird.

**30.** Verfahren nach einem der Ansprüche 18 bis 29, das die Vorverstärkung verschiedener Frequenzen vor der Verarbeitung in zumindest einem der Transmitter beinhaltet.

## Revendications

**1.** Système de communications audio comprenant une source de signal audio, au moins deux émetteurs pour émettre des signaux audio identiques générés par la source de signal audio vers un ou plusieurs récepteurs, et des moyens formant réseau pour convoyer des signaux venant de la source de signal audio vers les émetteurs, dans lequel les émetteurs émettent vers le ou les récepteur(s) des signaux modulés qui sont démodulés par le ou les récepteur(s), **caractérisé en ce qu'**au moins l'un des émetteurs est muni de moyens pour modifier des signaux reçus à partir des moyens formant réseau avant l'émission de façon à changer la phase des signaux reçus d'une ampleur qui est fonction du temps et/ou de la fréquence du signal reçu, de telle sorte que le signal venant dudit émetteur au nombre d'au moins un soit différent de celui du signal correspondant dans le ou les autre(s) émetteur(s).

2. Système selon la revendication 1, dans lequel l'ampleur de changement de phase des signaux varie de façon périodique en fonction de la fréquence.

3. Système selon la revendication 2, dans lequel l'ampleur de changement de phase des signaux varie de façon sinusoïdale en fonction de la fréquence.

4. Système selon la revendication 1, dans lequel l'ampleur de changement de la phase des signaux varie de façon périodique en fonction du temps.

5. Système selon la revendication 4, dans lequel l'ampleur de changement de la phase des signaux varie de façon sinusoïdale en fonction du temps.

6. Système selon la revendication 1, dans lequel l'ampleur de changement de la phase change de façon aléatoire en fonction de la fréquence et/ou du temps.

7. Système selon l'une quelconque des revendications 1 à 6, dans lequel l'amplitude des signaux varie de façon additionnelle en fonction du temps et/ou de la fréquence du signal reçu.

8. Système selon l'une quelconque des revendications 1 à 7 comprenant deux émetteurs, dans lequel un seul des émetteurs est muni desdits moyens de traitement du signal.

9. Système selon l'une quelconque des revendications 1 à 7 comprenant deux émetteurs, dans lequel les deux émetteurs sont munis desdits moyens de traitement du signal.

10. Système selon la revendication 9 lorsqu'elle dépend de la revendication 2 ou 3, dans lequel les deux émetteurs sont munis de moyens de traitement du signal pour changer la phase du signal de façon périodique en fonction de la fréquence ou du temps, et dans lequel les variations de phase en fonction de la fréquence des deux moyens de traitement du signal sont déphasées entre elles de 180°.

11. Système selon la revendication 10, dans lequel l'ampleur de changement de la phase est identique pour les deux moyens de traitement du signal.

12. Système selon les revendications 9 à 11 comprenant trois émetteurs, dans lequel tous les trois émetteurs sont munis desdits moyens de traitement du signal.

13. Système selon la revendication 12, dans lequel les trois moyens de traitement du signal ont chacun des réponses en amplitude différentes.

14. Système selon la revendication 12 ou 13, dans lequel les trois moyens de traitement du signal changent la phase des signaux reçus d'une ampleur qui varie de façon périodique en fonction de la fréquence, et dans lequel les trois moyens de traitement du signal ont chacun des périodes différentes.

15. Système selon la revendication 12 ou 13, dans lequel les trois moyens de traitement du signal changent l'amplitude et la phase de signaux d'entrée et ont chacun des combinaisons de paramètres différentes pour l'amplitude et la phase.

16. Système selon l'une quelconque des revendications 1 à 15, dans lequel au moins un émetteur comprend de plus des moyens pour pré-accentuer certaines fréquences avant le traitement.

17. Système selon l'une quelconque des revendications 1 à 16, dans lequel les émetteurs sont stationnaires.

18. Procédé d'utilisation d'un système de communications audio comprenant une source de signal audio, au moins deux émetteurs pour émettre des signaux audio identiques générés par la source de signal audio vers un ou plusieurs récepteurs, et des moyens formant réseau pour convoyer des signaux venant de la source de signal audio vers les émetteurs, dans lequel les émetteurs émettent vers le ou les récepteur(s) des signaux modulés qui sont démodulés par le ou les récepteur (s), le procédé étant **caractérisé par** le traitement, dans au moins l'un des émetteurs, de signaux reçus à partir des moyens formant réseau avant l'émission de façon à changer la phase des signaux reçus d'une ampleur qui est fonction du temps et/ou de la fréquence du signal reçu, de telle sorte que le signal venant dudit émetteur au nombre d'au moins un soit différent de celui du signal correspondant dans le ou les autre(s) émetteur(s).

19. Procédé selon la revendication 18, comprenant le fait de faire varier l'ampleur de changement de phase de façon périodique en fonction de la fréquence.

20. Procédé selon la revendication 19, comprenant le fait de faire varier l'ampleur de changement de phase de façon sinusoïdale en fonction de la fréquence.

21. Procédé selon la revendication 18, comprenant le fait de faire varier l'ampleur de changement de phase de façon périodique en fonction du temps.

22. Procédé selon la revendication 18, comprenant le fait de faire varier l'ampleur de changement de phase de façon sinusoïdale en fonction du temps.

23. Procédé selon la revendication 18, dans lequel l'ampleur de changement de phase varie de façon aléatoire en fonction de la fréquence et/ou du temps.

24. Procédé selon l'une quelconque des revendications 18 à 23, comprenant de plus le fait de faire varier l'amplitude en fonction du temps et/ou de la fréquence du signal reçu.

25. Procédé selon la revendication 19 ou 20, dans lequel on fait varier la phase dans deux émetteurs dans le système de telle sorte que les variations de phase soient déphasées entre elles de 180°.

26. Procédé selon la revendication 25, dans lequel l'ampleur de changement de phase est la même pour les signaux dans les deux émetteurs.

27. Procédé selon l'une quelconque des revendications 18 à 26, dans lequel le système comporte trois émetteurs, le procédé comprenant le traitement de signaux dans tous les trois émetteurs avant la modulation pour l'émission de telle sorte que les réponses en amplitude dans les émetteurs soient différentes les unes des autres.

28. Procédé selon la revendication 25, 26 ou 27, dans lequel on fait changer la phase des signaux reçus d'une ampleur qui varie de façon périodique en fonction de la fréquence en utilisant des périodes différentes dans chacun des trois émetteurs.

29. Procédé selon la revendication 25, 26, 27 ou 28, dans lequel les signaux sont traités dans les trois émetteurs de façon à changer leur amplitude et leur phase en utilisant des combinaisons de paramètres différentes pour tous les trois émetteurs.

30. Procédé selon l'une quelconque des revendications 18 à 29, comprenant la pré-accentuation de certaines fréquences avant le traitement dans au moins l'un des émetteurs.

Figure 1

FIGURE 2

(a)

Relative amplitude = 1.0, Relative delay = 0.20 ms

(b)

FiGURE 3

(a)

(b)

EP 1 207 507 B1

**Air Traffic Control Centre (control equipment)** 10

**Network** 11

**Radio Station (control equipment)** 16

**Group Delay filter** 15

**Transmitter** 17

12

125 005 MHz

group delay filter shown in series with both transmitters, configuration could be in one leg of two leg channel only. In case of three leg channel, group delay filter in two legs.

**Radio Station (control equipment)** 16

**Group Delay filter** 15

**Transmitter** 17

13

124 995 MHz

Figure 4

Random delay variation over time.

Example 2

Delay as a function of elapsed time

Figure 5

Sinusoidal phase variation over frequency.

Example S

Tx1: MAMPL=0.00, PAMPL=0.30, NPERIODS=8

Figure 6

Monotonic group delay variation over frequency

Example 6

Figure 7.

Example 7    FIGURE 8

Tx1: MAMPL=0.30, PAMPL=0.30, NPERIODS=8

(a)

Tx2: MAMPL=0.30, PAMPL=0.30, NPERIODS=8

(b)

Figure 8

Tx1: MAMPL=0.30, PAMPL=0.30, NPERIODS=6

(c)

Mean filter delay = 3 ms

Tx1: MAMPL=0.30, PAMPL=0.30, NPERIODS=12

(d)

Mean filter delay = 6 ms

Example 9

Figure 9

Tx1: MAMPL=0.00, PAMPL=0.30, NPERIODS=8

(a)

Tx2: MAMPL=0.00, PAMPL=0.30, NPERIODS=8

(b)

Example 11

Figure 10

Tx1: MAMPL=0.00, PAMPL=0.30, NPERIODS=7

(a)

Tx2: MAMPL=0.00, PAMPL=0.30, NPERIODS=8

(b)

FIGURE 10

Tx3: MAMPL=0.00, PAMPL=0.30, NPERIODS=8

FIGURE 11

(a) Relative amplitude = 1.0, Relative delay = 0.25 ms

(b)

FIGURE 12

(a)

Relative amplitude = 1.0, Relative delay = 5.00 ms

(b)